# EUROPEAN PATENT SPECIFICATION

(11) **EP 3 017 694 B1**
(45) Date of publication and mention of the grant of the patent: **26.04.2017**
(21) Application number: 15193261.3
(22) Date of filing: 05.11.2015
(51) Int. Cl.: A01K 39/012

(54) **MULTIPLE COMPARTMENT BIRD FEEDER**
MEHRFACHABTEIL-VOGELFUTTERSPENDER
DISPOSITIF D'ALIMENTATION POUR OISEAUX À COMPARTIMENTS MULTIPLES

(30) Priority: 06.11.2014 CA 2870348
(43) Date of publication of application: 11.05.2016
(73) Proprietor: PLC Patents and Trademarks Inc., Lac Brome, Québec J0E 1V0 (CA)
(72) Inventor: COTE, Paul L., Lac Brome, Québec J0E 1V0 (CA)
(74) Representative: Glück Kritzenberger Patentanwälte PartGmbB

(56) References cited:
- GB-A- 2 410 884
- US-A- 4 896 628
- US-A1- 2013 025 581
- US-A1- 2014 150 725
- US-B1- 7 198 004

## Description

### FIELD OF THE INVENTION

The present invention relates to a bird feeder and more particularly, relates to a multi compartment bird feeder.

### BACKGROUND OF THE INVENTION

The use of feeders for feeding birds is well known in the art and widely practised. There are any number of different types of bird feeders. For example, some bird feeders are designed to be squirrel resistant - i.e. to prevent squirrels and other marauders from accessing the seed within the bird feeder. Some bird feeders are designed to attract a particular type of bird and to do so different perch arrangements may be utilized. One of the most popular types of bird feeders is what is known as a tube bird feeder. This type of bird feeder consists of a tube (usually cylindrical) which has a number of seed ports for permitting birds' access to the feed. However, one problem with this type of bird feeder is that the seed ports are distributed over the total height of the container. As the bird seed is consumed, access to the seed from the upper feed ports cannot be had. Accordingly, the number of birds allowed access to the bird seed becomes limited as the tube bird feeder empties.

US 7 198 004 B1 discloses a bird feeder of the tube-type having a vertically disposed hollow body portion formed of metal mesh material or a clear plastic material. The body portion has a plurality of inverted, truncated funnel members or baffles positioned therein in a vertically spaced-apart relationship which maintain a certain amount of feed at that level even though the main feed supply has dropped below that funnel member or baffle.

GB 2 410 884 A describes a wild bird feeder that recycles the seeds that spill from the feeding apertures and which would normally fall to the ground and go to waste. Particularly a device for dispensing niger seed to goldfinches where the quantity of seeds lost is a major problem. The assembled feeder comprises a number of the same seed container units interconnected one above the other. The container units comprise a tubular body closed at the lower end with a base that incorporates a female coupler on the underside. At the upper end of the body is included a male coupler and a means to catch the falling seeds. Seeds dislodged by feeding birds fall into a lower container unit where they are again immediately available to the birds.

US 4 896 628 A discloses an animal feeding device includes a food container preferably shaped as a composite cylindrical can with seamed metal closures, one of which is easily openable. A base member is attachable to the food container through a food distribution coupling to secure the open end of the food container thereadjacent. The food distribution coupling includes a retaining ring for detachablysecuring the food distribution coupling to the food container to allow food to fall downwardly therefrom through the opening into a food distribution chamber in the coupling therebelow. A plurality of food distribution ports are adapted to receive food from the food distribution chamber for carrying same into the food trough of the base member.

US 2014/150725 A1 discloses a bird feeder according to the preamble of claim 1.

### SUMMARY OF THE INVENTION

It is an object of the present invention to provide a multi compartment bird feeder wherein the above problem is obviated.

It is a further object of the present invention to provide a bird feeder wherein the seed ports are utilized to secure seed support members in position.

The present invention provides a bird feeder comprising a seed tube having a side wall, said side wall having a plurality of side wall openings therein; a plurality of seed ports, one of said seed ports being located at each of said side wall openings; a plurality of seed support members, said seed support members being spaced from each other within said seed tube, at least one of said seed support members being retained in position by at least one of said seed ports, wherein each of said seed support members retained by a seed port has a central opening to permit seed to pass therethrough, wherein said central openings have an oval configuration; a top ring secured to an upper end of said side wall, a removable cover, said removable cover being secured to said top ring; a base, said base being secured to said side wall at a lower end thereof, wherein said central openings are misaligned, a first one of said central openings having a longitudinal axis perpendicular to a longitudinal axis of said second central opening.

The bird feeder has, as above stated, a seed tube with a side wall. The seed tube may be of any configuration, although a cylindrical configuration is conventional. Preferably, the body is formed of a suitable plastic material and is preferably somewhat transparent.

The seed tube has a plurality of side wall openings therein. The side wall openings are again preferably circular in nature. Each side wall opening has a structure which will permit a seed port to be retained thereat.

Conventionally, the side wall openings are diametrically opposed with two side wall openings being located at any particular height. The arrangement is such that at least one of the seed ports interacts with a seed support member to retain the same in position. Preferably, both diametrically opposed seed ports are utilized to secure the seed support member in position.

Each seed support member is designed to permit seed to flow therethrough to a lower level. Each seed support member has a structure wherein a centrally located aperture is provided at a certain height. The opening is preferably situated at a level above the side wall opening and therefore the feed, when placed in the seed tube will fill up to a certain level and subsequently seed will pass through to a lower level. Each seed support member also preferably has a sloped surface so as to divert the seed towards the side wall opening.

As used herein, the term "seed port" defines a member which has a seed control element and a perch. In some bird feeders, the seed control portion or member will comprise a baffle. In the instant arrangement, a side wall having apertures is used to control the seed. In one particular arrangement, the side wall has a plurality of apertures to permit the birds to access the seeds. Typically, in this instance, the seeds would be relatively small such as niger seeds.

### BRIEF DESCRIPTION OF THE DRAWINGS

Having thus generally described the invention, reference will be made to the accompanying drawings illustrating an embodiment thereof, in which:
Figure 1 is a side elevational view of a bird feeder according to the present invention;
Figure 2 is a vertical sectional view thereof;

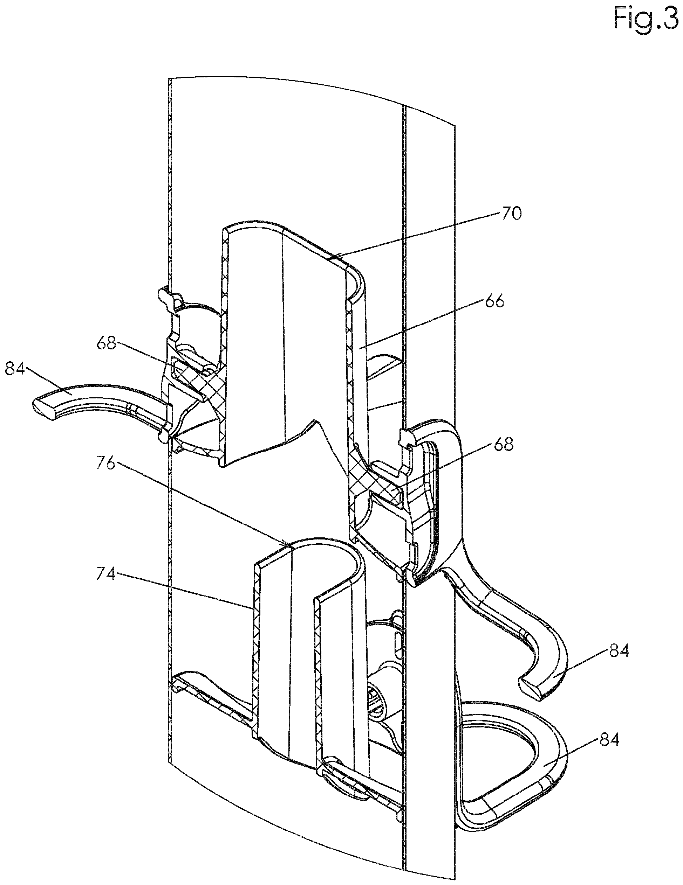

Figure 3 is an enlarged vertical sectional of the central portion of the bird feeder;
Figure 4 is an exploded view of the bird feeder;
Figure 5 is an exploded detailed view of the one of the seed ports and inner seed support members;

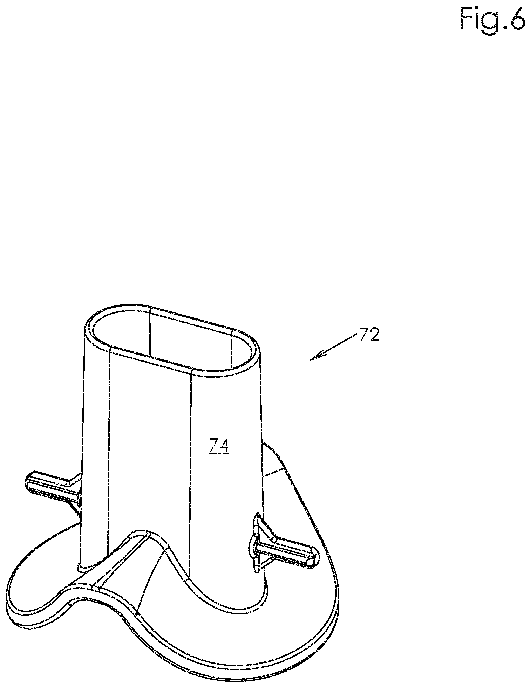

Figure 6 is a perspective view of a seed support member utilized in either the intermediate or upper positions;
Figure 7 is a perspective view of the rear face of a seed port utilized in the bird feeder of the present invention; and
Figure 8 is a horizontal sectional view of the bird feeder.

### DETAILED DESCRIPTION OF THE INVENTION

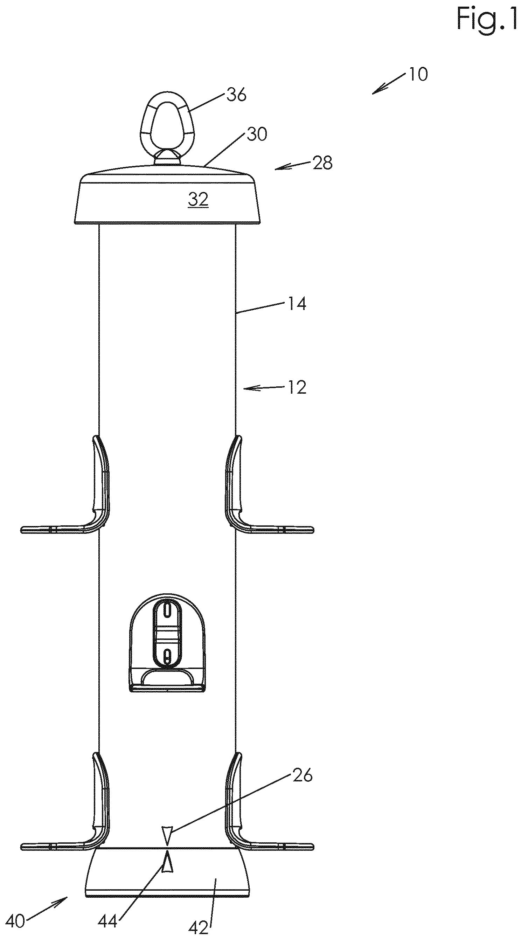

Referring to the drawings in greater detail and by reference characters thereto, there is illustrated in Figure 1 a bird feeder which is generally designated by reference numeral 10.

Bird feeder 10 includes a seed tube 12 which comprises a side wall 14 arranged in a circular configuration. It will be understood that the term "seed tube" is used for convenience as most bird feeders use seeds. However, other suitable loose material could also be utilized and are within the scope of the term "seed tube". Similarly, other configurations of the bird feeder may be utilized although a circular configuration is the most widely used as the material used for the volume created is minimized.

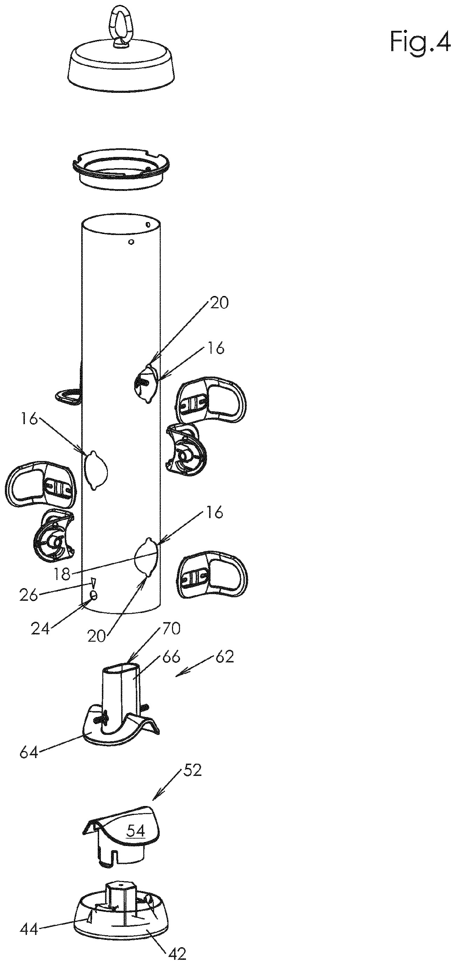

As may be best seen in Figure 4, side wall 14 has a plurality of side wall openings 16. Each feed opening 16 is defined by a marginal edge 18 and as will be noted, there are two recesses 20 provided in marginal edge 18. These recesses 20 are diametrically opposed although this is not an essential feature of the invention.

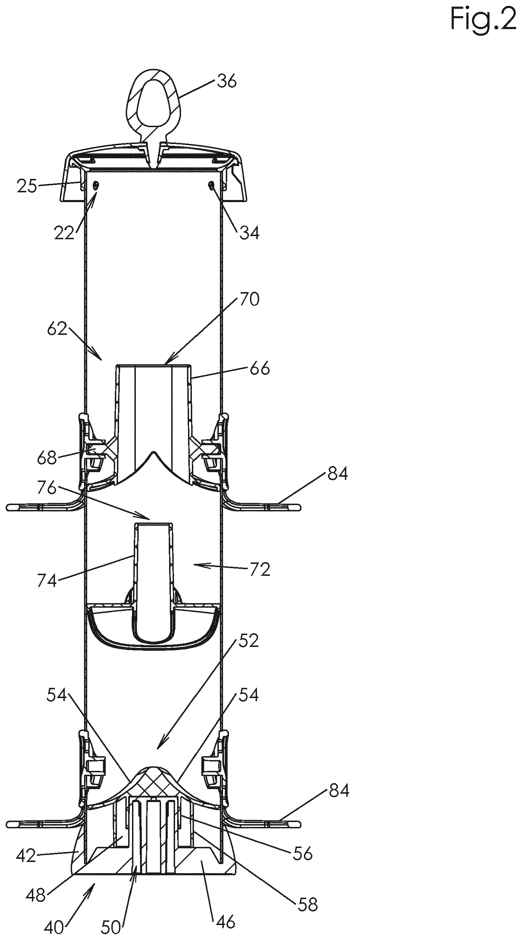

Side wall 14 of seed tube 12 also includes a plurality of top apertures 22 as may be seen in Figure 2 for reasons which will be discussed hereinbelow. As seen in Figure 4, there are also provided lower or bottom apertures 24. An indicator 26 is utilized to mark the location of apertures 24.

An upper ring 25 is secured to seed tube 12. To this end, there are provided a plurality of protrusions 34 which engage within top apertures 22.

A cover is generally designated by reference numeral 28 and includes a top wall 30 extending substantially horizontally and a side wall 32 extending downwardly from the periphery of top wall 30. Top wall 30 has, on its interior, a plurality of protrusions (as known in the art) which are designed to mate with top ring 25 to retain cover 28 in position. A hanger 36 extends through an aperture in the top wall 30 of cover 28 as may be best seen in Figure 2.

Bird feeder 10 also includes a base generally designated by reference numeral 40. Base 40, as may be seen in Figure 2, includes a side wall 42 having an indicator 44 thereon. The arrangement is such that protrusions (not shown) on the interfacing surface of side wall 42 will mate and seat within apertures 24 in seed tube 12 similar to the arrangement for top ring 25. This is achieved when indicators 26 on side wall 14 and indicator 44 on side wall 42 of base 40 are aligned.

Base 40 also includes a bottom wall 46. A recess 50 is provided to receive a post when it is desired to mount the bird feeder thereon. The arrangement is such that recess 50 can receive either the swaged end of a post or the normal end as disclosed in co-pending United States application S.N. 13/986,805.

Base 40 also supports a bottom seed support member generally designated by reference numeral 52. Seed support member 52 has a pair of seed support surfaces 54 which are angled downwardly to divert seed outwardly towards side wall openings 16. Seed support member 52 also has an inner circular wall 56 which is designed to seat on base 40. There is also an outer circular wall 58.

The bird feeder includes an upper seed support member generally designated by reference numeral 62. Upper seed support member 62 includes a seed support surface 64 which is sloped downwardly and as well, has an oval center structure 66. A pair of diametrically opposed prongs 68 are provided. Oval center structure 66 includes a central opening generally designated by reference numeral 70.

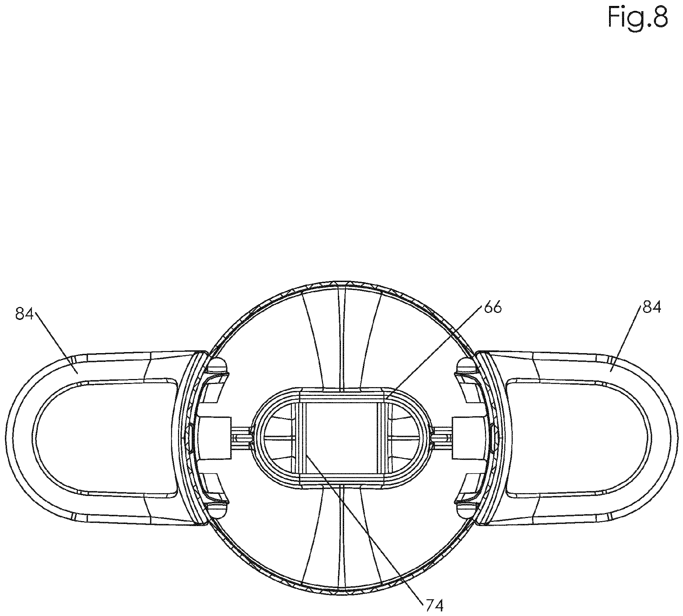

Bird feeder 10 includes an intermediate seed support member generally designated by reference numeral 72. Intermediate seed support member 72 is placed between upper seed support member 62 and lower seed support member 52. Intermediate seed support member 72 is similar in structure to upper seed support member 62. Thus, it has an oval center structure 74 with an opening 76 therein. It will be noted that oval center structure 66 of upper seed support member 62 and oval center structure 74 of intermediate seed support member 72 have their longitudinal axis perpendicular to each other. This will aid in proper distribution of the seed when poured in from the top. Thus, as may be seen from Figure 8, some of the seed which will flow through opening 70 of upper seed support member 62 will pass through opening 76 of intermediate seed support member 72 and some will be distributed onto the seed support surface thereof. In other words, once the upper seed support member 62 is filled to the top of oval center structure 66, excess seed will pass through opening 70 with some passing through opening 76. This is continued until the seed tube 12 is completely filled. Upon the lowering of the levels with the birds eating from seed support members 52 and 62, the excess capacity at the top of the feed tube 12 will allow refilling of these lower seed support members.

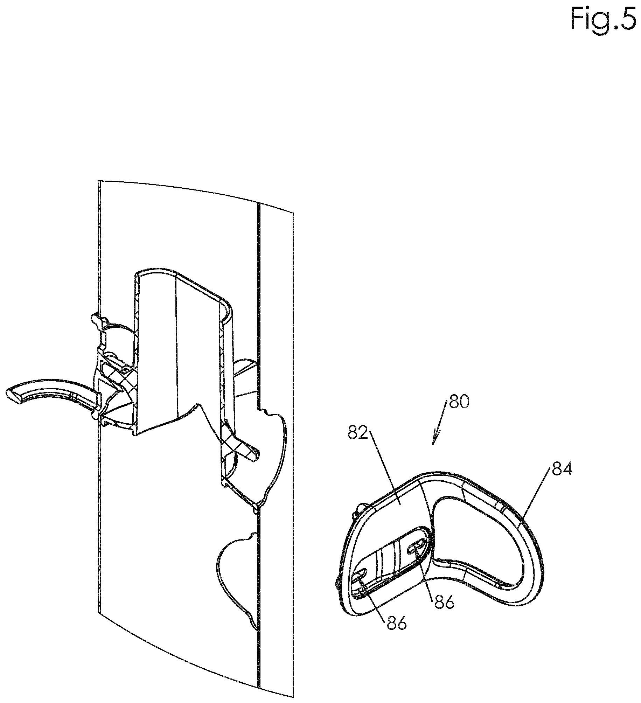

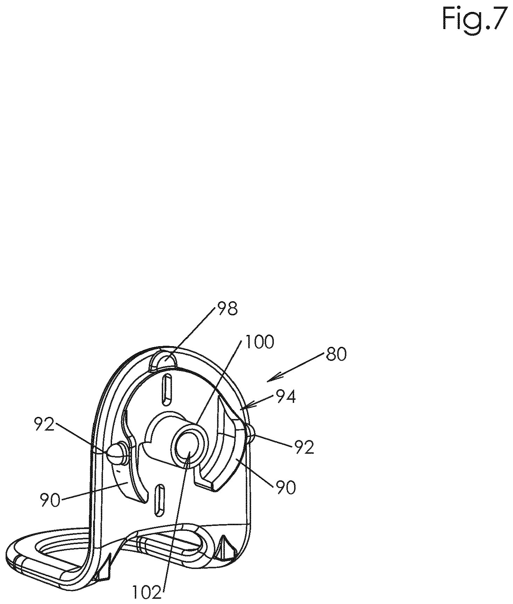

For each feed opening 16, there is provided a seed port 80 the details of which may be seen in Figures 5 and 7. Thus, each seed port 80 has a side wall 82 and a perch 84. It will be noted that side wall 82 effectively covers each feed opening 16 while longitudinal slots or apertures 86 permit access to the seed by the bird.

On the rear face of side wall 82, there is provided a pair of partial walls 90 each having a protrusion 92 extending therefrom. Protrusions 92 define a channel 94 between itself and the rear face of side wall 82. Thus, as partially indicated in Figure 5, a seed port 80 may be inserted into seed tube 12 through feed opening 16 and then rotated such that the side wall 14 is held between protrusion 92 and side wall 82. A center protrusion 98 will act to retain the perch structure 80 in position. A circular wall 100 defines a recess 102 which receives a prong 68 to retain upper seed support member 62. A similar arrangement is used to retain seed support member 72.

It will be understood that the description shows an embodiment of the invention and that changes and modifications may be made thereto without departing from the spirit and scope of the invention. For example, the arrangement of the prongs 68 and recesses 102 may be reversed - in other words, the seed port may have the prong with the seed support members having the recess.

## Claims

1. A bird feeder (10) comprising:
a seed tube (12) having a side wall (14), said side wall (14) having a plurality of side wall openings (16) therein;
a plurality of seed ports (80), one of said seed ports (80) being located at each of said side wall openings (16);
a plurality of seed support members (52, 62, 72), said seed support members (52, 62, 72) being spaced from each other within said seed tube (12), at least one of said seed support members (52, 62, 72) being retained in position by at least one of said seed ports (80), wherein each of said seed support members (52, 62, 72) retained by a seed port (80) has a central opening (70, 76) to permit seed to pass therethrough, wherein said central openings (70, 76) have an oval configuration;
a top ring (25) secured to an upper end of said side wall (14), a removable cover, said removable cover being secured to said top ring;
a base (40), said base (40) being secured to said side wall (14) at a lower end thereof,
**characterized in that** said central openings (70, 76) are misaligned, a first one of said central openings having a longitudinal axis perpendicular to a longitudinal axis of said second central opening.

2. The bird feeder (10) of Claim 1 wherein said base (40) retains one of said seed support members (52, 62, 72) in a desired position.

3. The bird feeder (10) of Claim 1 wherein a pair of opposed seed ports (80) are diametrically opposed, each of said seed ports (80) retaining a single seed support member (52, 62, 72).

4. The bird feeder (10) of Claim 1 including an upper seed support member (62), a lower seed support member (52) retained in position by said base, and an intermediate seed support member (72), each of said seed support member (52, 62) and said intermediate seed support member (72) being retained in position by respective seed ports (80).

5. The bird feeder (10) of Claim 4 wherein each of said upper seed support member (62) and said intermediate seed support member (72) have cylindrical prongs (68) extending outwardly therefrom, each of said seed ports (80) having a cylindrical recess designed to receive a respective cylindrical prong (68), each of said seed ports (80) having first and second protrusions (92), said first and second protrusions (92) locking said seed port (80) in position on said side wall (14) of said seed tube (12).

6. The bird feeder (10) of Claim 1 wherein each of said seed ports (80) comprises a side wall (14) and a perch (84), said side wall (14) covering one of the side wall openings (16), said side wall (14) having at least one aperture (22, 24, 86) therein.

7. The bird feeder (10) of Claim 6 where said side wall (14) has a plurality of apertures (22, 24, 86) therein, each of said apertures (22, 24, 86) being in the form of an elongated slot.

## Patentansprüche

1. Vogelfutterspender (10), umfassend:
ein Körnerrohr (12) mit einer Seitenwand (14), wobei die Seitenwand (14) mehrere Seitenwandöffnungen (16) aufweist;
mehrere Körneröffnungen (80), wobei jeweils eine der Körneröffnungen (80) an jeder der Seitenwandöffnungen (16) angeordnet ist;
mehrere Körnerrückhaltelemente (52, 62, 72), wobei die Körnerrückhaltelemente (52, 62, 72) innerhalb des Körnerrohrs (12) voneinander beabstandet sind, wobei mindestens eines der Körnerrückhaltelemente (52, 62, 72) von mindestens einer der Körneröffnungen (80) in Position gehalten wird, wobei jedes der Körnerrückhaltelemente (52, 62, 72), das von einer Körneröffnung (80) gehalten wird, eine zentrale Öffnung (70, 76) aufweist, damit die Körner durch diese hindurchtreten können, wobei die zentralen Öffnungen (70, 76) eine ovale Konfiguration haben;
ein oberer Ring (25), der an einem oberen Ende der Seitenwand (14) befestigt ist, ein abnehmbarer Deckel, wobei der abnehmbare Deckel an dem oberen Ring befestigt ist;
eine Basis (40), wobei die Basis (40) an einem unteren Ende der Seitenwand (14) befestigt ist,
**dadurch gekennzeichnet, dass** die zentralen Öffnungen (70, 76) versetzt zueinander ausgerichtet sind, wobei die erste der zentralen Öffnungen eine Längsachse hat, die senkrecht zu einer Längsachse der zweiten zentralen Öffnung verläuft.

2. Vogelfutterspender (10) nach Anspruch 1, wobei die Basis (40) eines der Körnerrückhaltelemente (52, 62, 72) in einer gewünschten Position hält.

3. Vogelfutterspender (10) nach Anspruch 1, wobei sich ein Paar von gegenüberliegenden Körneröffnungen (80) diametral gegenüberliegt, wobei jede der Körneröffnungen (80) ein einzelnes Körnerrückhaltelement (52, 62, 72) hält.

4. Vogelfutterspender (10) nach Anspruch 1 umfassend ein oberes Körnerrückhaltelement (62), ein unteres Körnerrückhaltelement (52), das von der Basis in Position gehalten wird, und ein mittleres Körnerrückhaltelement (72) aufweist, wobei jedes der Körnerrückhaltelemente (52, 62) und das mittlere Körnerrückhaltelement (72) von entsprechenden Körneröffnungen (80) in Position gehalten werden.

5. Vogelfutterspender (10) nach Anspruch 4, wobei jedes des oberen Körnerrückhaltelements (62) und des mittleren Körnerrückhaltelements (72) zylindrische Zinken (68) aufweist, die sich von diesen nach außen erstrecken, wobei jede der Körneröffnungen (80) eine zylindrische Vertiefung aufweist, die zum Aufnehmen eines entsprechenden zylindrischen Zinkens (68) vorgesehen ist, wobei jede der Körneröffnungen (80) erste und zweite Vorsprünge (92) aufweist, wobei die ersten und zweiten Vorsprünge (92) die Körneröffnungen (80) in Position an der Seitenwand (14) des Körnerrohrs (12) verriegeln.

6. Vogelfutterspender (10) nach Anspruch 1, wobei jede der Körneröffnungen (80) eine Seitenwand (14) und eine Sitzstange (84) umfasst, wobei die Seitenwand (14) eine der Seitenwandöffnungen (16) abdeckt, wobei die Seitenwand (14) mindestens eine Öffnung (22, 24, 86) aufweist.

7. Vogelfutterspender (10) nach Anspruch 6, wobei die Seitenwand (14) mehrere Öffnungen (22, 24, 86) aufweist, wobei jede der Öffnungen (22, 24, 86) die Form eines länglichen Schlitzes hat.

## Revendications

1. Dispositif d'alimentation pour oiseaux (10) comprenant:
un tube à graines (12) comportant une paroi latérale (14), ladite paroi latérale (14) présentant une pluralité d'ouvertures de paroi latérale (16);
une pluralité de ports à graines (80), un desdits ports à graines (80) étant situé sur chacune desdites ouvertures de paroi latérale (16);
une pluralité d'éléments supports de graines (52, 62, 72), lesdits éléments supports de graines (52, 62, 72) étant espacés les uns des autres dans ledit tube à graines (12), au moins un desdits éléments supports de graines (52, 62, 72) étant retenu en position par au moins un desdits ports à graines (80), chacun desdits éléments supports de graines (52, 62, 72) étant retenu par un port de graines (80) comportant une ouverture centrale (70, 76) pour permettre le passage des graines à travers, lesdites ouvertures centrales (70, 76) ayant une conformation ovale ;
un anneau supérieur (25) fixé à une extrémité supérieure de ladite paroi latérale (14), un couvercle amovible, ledit couvercle amovible étant fixé audit anneau supérieur ;
une base (40), ladite base (40) étant fixée à ladite paroi latérale (14) à son extrémité inférieure,
**caractérisé en ce que** lesdites ouvertures centrales (70, 76) sont désalignées, une premières desdites ouvertures centrales ayant un axe longitudinal perpendiculaire à un axe longitudinal de ladite seconde ouverture centrale.

2. Dispositif d'alimentation pour oiseaux (10) selon la revendication 1, dans lequel ladite base (40) retient un desdits éléments supports de graines (52, 62, 72) dans une position désirée.

3. Dispositif d'alimentation pour oiseaux (10) selon la revendication 1, dans lequel deux ports de graines opposés (80) sont diamétralement opposés, chacun desdits ports de graines (80) retenant un seul élément support de graines (52, 62, 72).

4. Dispositif d'alimentation pour oiseaux (10) selon la revendication 1, comprenant un élément support de graines supérieur (62), un élément support de graines inférieur (52) retenu en position par ladite base et un élément support de graines (52) intermédiaire (72), chacun dudit élément support de graines (52, 62) et dudit élément support de graines intermédiaire (72) étant retenu en position par des ports de graines respectifs, (80).

5. Dispositif d'alimentation pour oiseaux (10) selon la revendication 4, dans lequel chacun dudit élément support de graines supérieur (62) et dudit élément support de graines intermédiaire (72) comporte des dents cylindriques (68) s'étendant vers l'extérieur de celui-ci, chacun desdits ports de graines (80) comportant un retrait cylindrique conçu pour recevoir une dent cylindrique (68), chacun desdits ports de graines (80) comportant une première et une seconde saillies (92), lesdites première et seconde saillies (92) verrouillant ledit port de graines (80) en position sur ladite paroi latérale (14) dudit tube à graines (12).

6. Dispositif d'alimentation pour oiseaux (10) selon la revendication 1, dans lequel chacun desdits ports de graines comprend une paroi latérale (14) et une perche (84), ladite paroi latérale (14) couvrant une des ouvertures de paroi latérale (16), ladite paroi latérale (14) présentant au moins une ouverture (22, 24, 86).

7. Dispositif d'alimentation pour oiseaux (10) selon la revendication 6, dans lequel ladite paroi latérale (14) présente une pluralité d'ouvertures (22, 24, 86), chacune desdites ouvertures (22, 24, 86) ayant la forme d'une fente allongée.
